# EUROPÄISCHE PATENTSCHRIFT

(11) **EP 0 630 721 B1**
(45) Veröffentlichungstag und Bekanntmachung des Hinweises auf die Patenterteilung: **31.07.1996**
(21) Anmeldenummer: 94107584.8
(22) Anmeldetag: 17.05.1994
(51) Int. Cl.: B23Q 3/12, B23B 31/40, B23B 31/30

(54) **Hydraulisches Spannelement**
Hydraulic clamping device
Dispositif de serrage hydraulique

(30) Priorität: 26.05.1993 DE 4317502
(43) Veröffentlichungstag der Anmeldung: 28.12.1994
(73) Patentinhaber: ALBERT SCHREM WERKZEUGFABRIK GmbH, D-89537 Giengen (DE)
(72) Erfinder: Bauer, Ulrich, D-89555 Steinheim (DE); Schrem, Monika, D-8953 Giengen (DE)
(74) Vertreter: Kerkhof, Marianne

(56) Entgegenhaltungen:
- DE-A- 3 941 765
- DE-A- 4 012 980
- DE-A- 4 232 282

## Beschreibung

Die Erfindung betrifft ein hydraulisches Spannelement mit den Merkmalen des Oberbegriffes des Anspruches 1. Ein bekanntes Spannelement dieser Art (vgl. DE-OS 39 41 765) weist zum Justieren eines Spannstückes, beispielsweise eines Wälzfräsers, oder eines anderen Rotationswerkzeuges bzw. eines rotierenden Werkstückes als Druckelement einen Kegeldruckring mit keilförmigem Radialquerschnitt auf, der mit relativ großem radialen Spiel - durch einen Gummiring zentriert - eine axiale Verlängerung des Ringkolbens umgibt. In axialer Richtung gesehen, ist dieser Kegeldruckring zwischen einem auf dem Grundkörper des hydraulischen Spannelementes sitzenden, verstellbaren Gewindering und einem mittels Hülse auf den Dorn aufgeschraubten federnden Radialflansch derart angeordnet, daß die Keilfläche des Druckringes gegen eine entsprechende Schrägfläche des federnden Flansches anliegt. Radiale Druckschrauben des Kegeldruckringes ermöglichen seine gezielte radiale Verstellung und damit eine gewünschte Beeinflussung der axialen Spannkräfte, wodurch das System, bestehend aus Aufsteckdorn, hydraulischem Spannelement sowie dem auf dem Dorn zu verspannenden Spannstück, nämlich einem Rotationswerkzeug, beispielsweise Wälzfräser, Werkstücke oder dgl. gezielt ausgerichtet, also so justiert werden kann, daß Rundlauffehler vermieden sind.

Dabei ermöglicht das bekannte hydraulische Spannelement nach der Justierung auch eine Entlastung des hydraulisch beaufschlagten Ringkolbens, da der Tellerflansch durch den Kegeldruckring und den Gewindering in seiner justierten Lage fixiert wird.

Nachteilig bei diesem bekannten Spannelement ist, daß es technisch aufwendig ist und eine besonders durch den Gewindering und den Kegeldruckring samt diesen zentrierenden Gummiring bedingte relativ große Baulänge hat.

Es ist Aufgabe der Erfindung, ein hydraulisches Spannelement der gattungsgemäßen Art zu schaffen, das bei einfachem Aufbau eine optimal kurze axiale Baulänge aufweist, leicht zu bedienen ist und insbesondere eine präzise Justierung von Rundlauffehlern beim Einrichten ermöglicht.

Erfindungsgemäß wird diese Aufgabe durch die im kennzeichnenden Teil des Anspruchs 1 angegebenen Merkmale gelöst. Dadurch, daß das Druckelement nicht mehr wie bei der bekannten Ausführung ein geschlossener Ausgleichsring, nämlich des Kegeldruckringes ist, sondern durch mehrere, symmetrisch zur Längsachse des Spannelementes liegende einstellbare, an dem Ringkolben gehalterte Ausgleichskeile gebildet wird, kann auf einen zusätzlichen Stützring verzichtet werden. Die erfindungsgemäß vorgesehenen einzelnen Ausgleichskeile lassen sich für mehrere Spannelementgrößen verwenden und sind einfach herzustellen. Das erfindungsgemäße Spannelement hat daher auch Vorteile in der Herstellung. Durch gleichmäßiges Festziehen aller Ausgleichsschrauben der Ausgleichskeile wird eine gleichmäßige axiale Abstützung gegenüber dem Rotationskörper auch bei Anordnung eines federnden Radialflansches erreicht, wobei aber auch erforderlichenfalls durch gezielte Betätigung der einzelnen Ausgleichsschrauben und damit der Ausgleichkeile der Rundlauf des Werkzeuges bzw. Werkstückes sehr präzis und leicht eingestellt werden kann. Vorteilhaft sind vier bis zehn, vorzugsweise acht, Ausgleichskeile mit Ausgleichsschrauben gleichmäßig über den Umfang des Spannelementes verteilt angeordnet. Ein weiterer Vorteil der erfindungsgemäßen Lösung liegt darin, daß der einfache konstruktive Aufbau des Spannelementes Fehlbedienungen nahezu ausschließt. Die Erfindung gewährleistet ferner, daß auch bei Entlastung des Ringkolbens, nämlich bei Rückstellung der Hydraulik der einjustierte Rundlaufausgleich erhalten bleibt. Dies ist dadurch erreicht, daß die hülsenförmigen Ausgleichskeile eine, vorzugsweise an ihrem Kopf liegende Schrägfläche als Keil haben, der eine entsprechende Schrägfläche am Grundkörper des Spannelementes derart zugeordnet ist, daß bei radialer Verstellung der Ausgleichsschrauben, also bei der Einjustierung, die Ausgleichskeile in der justierten Einstellung gegen den Grundkörper abgestützt sind. Hierdurch ist eine mechanisch starre Abstützung zwischen dem Rotationsspannstück, also dem Werkzeug bzw. Werkstück, den Ausgleichskeilen und dem auf den Dorn aufgeschraubten Grundkörper des Spannelementes gegeben, und zwar auch dann, wenn bei den nachstehend beschriebenen besonderen Ausführungsformen eine Hülse mit radialem federndem Flansch angeordnet ist, die ihrerseits mittels Außengewinde den Grundkörper aufnimmt. Weitere vorteilhafte Ausbildungen des Erfindungsgegenstandes werden nachstehend anhand einiger Ausführungsbeispiele anhand der Zeichnungen näher erläutert.
Es zeigen:
- Fig. 1: eine Ausführung des erfindungsgemäßen Spannelementes in Teilansicht und Teilschnitt samt Aufnahmedorn und auf dem Dorn sitzendem Werkzeug, nachstehend Ausführung "A" genannt,
- Fig. 2: einen Schnitt nach II-II der Fig. 1,
- Fig. 3: einen Schnitt nach III-III der Fig. 1,
- Fig. 4 und 5: einen Ausgleichskeil nach Fig. 1 im Schnitt und in Ansicht Pfeil V der Fig. 4,
- Fig. 6 und 7: eine Draufsicht auf einen Ringkolben sowie eine radiale Ansicht des Ringkolbens, teilweise im Schnitt durch den Ringkolben entsprechend der Ausführung nach den Fig. 1 bis 5,
- Fig. 8: in vergrößerter Darstellung einen Teilausschnitt aus Fig. 1,
- Fig. 9: im Teilausschnitt eine Variante "B" mit zylindrischem Ausgleichskeil,
- Fig. 10: eine radiale Teilansicht der Fig. 9,
- Fig. 11 und 12: den Ringkolben gemäß Variante "B" in Draufsicht, teilweise geschnitten (Fig. 11) und in Seitenansicht im Teilschnitt (Fig. 12),
- Fig. 13 und 14: eine weitere Variante "C", Darstellungen entsprechend den Fig. 9 und 10,
- Fig. 15: eine dritte Variante "D" im Schnitt entsprechend Fig. 13,
- Fig. 16 und 17: einen Einzelteil der Ausführung nach Fig. 15, nämlich einen offenen Sprengring in Ansicht von vorn und von der Seite,
- Fig. 18: in Ansicht und Teilschnitt einen Ringkolben entsprechend der Ausführung nach Fig. 15 mit Sprengring.

Bei sämtlichen Ausführungsformen der Erfindung ist auf einem Aufnahmedorn 2 ein Rotationskörper in Form eines scheiben- oder wellenförmigen Spannstückes 1, beispielsweise ein Werkstück, Werkzeug, insbesondere ein Wälzfräser oder dgl., aufgeschoben, wobei dieses Rotationsspannstuck an dem anderen, nicht dargestellten Dornende gegen einen Bund oder einen ähnlichen Anschlag anliegt.

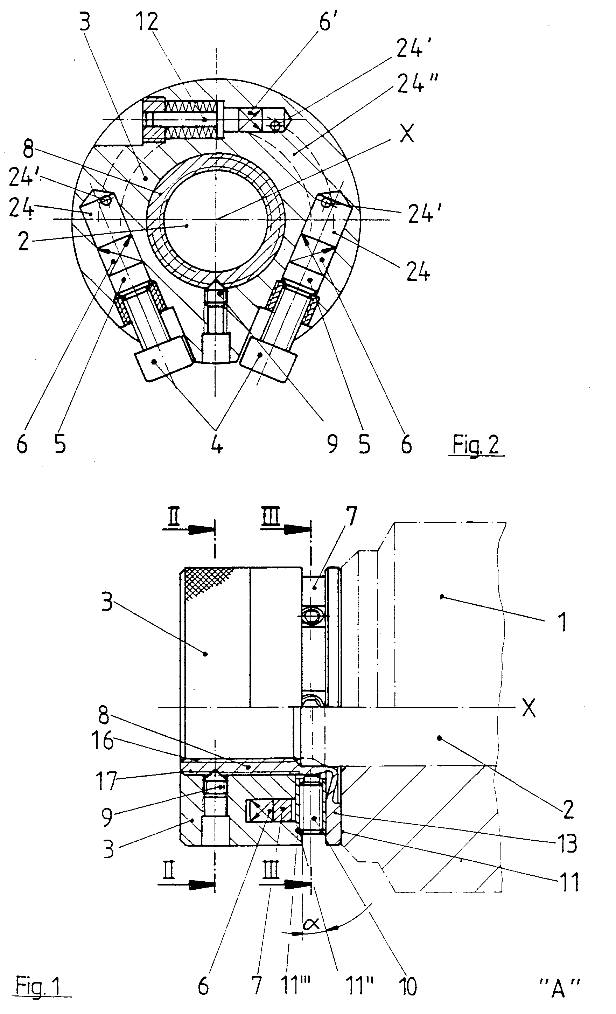

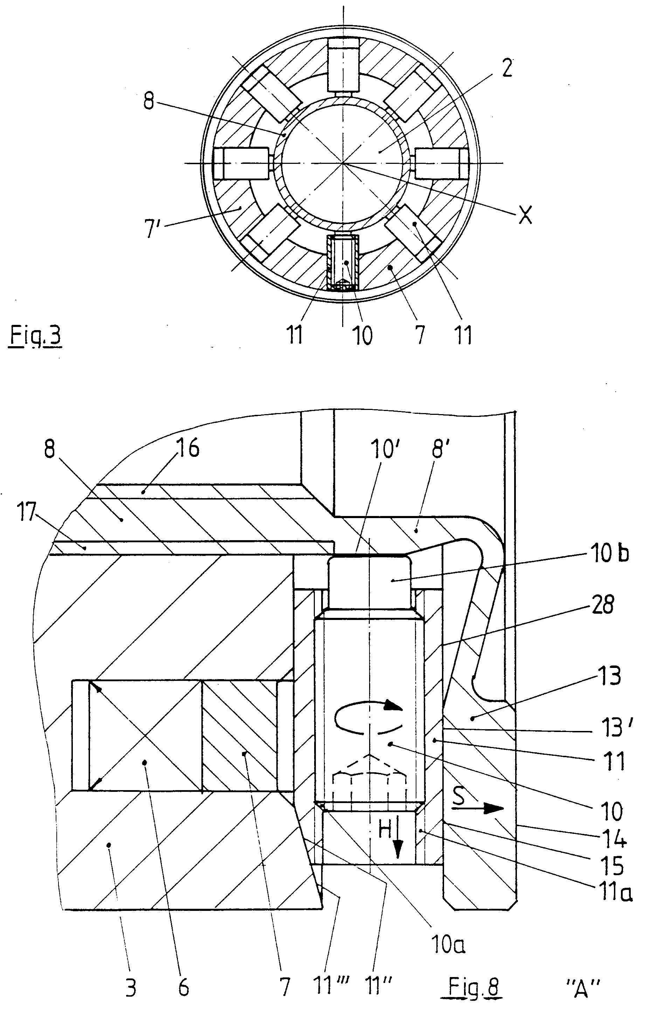

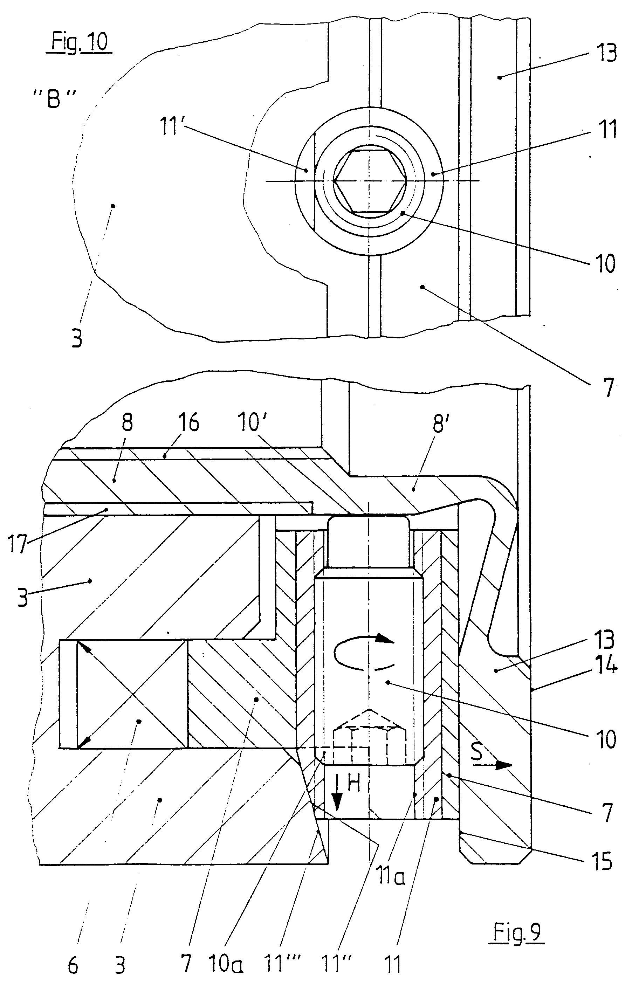

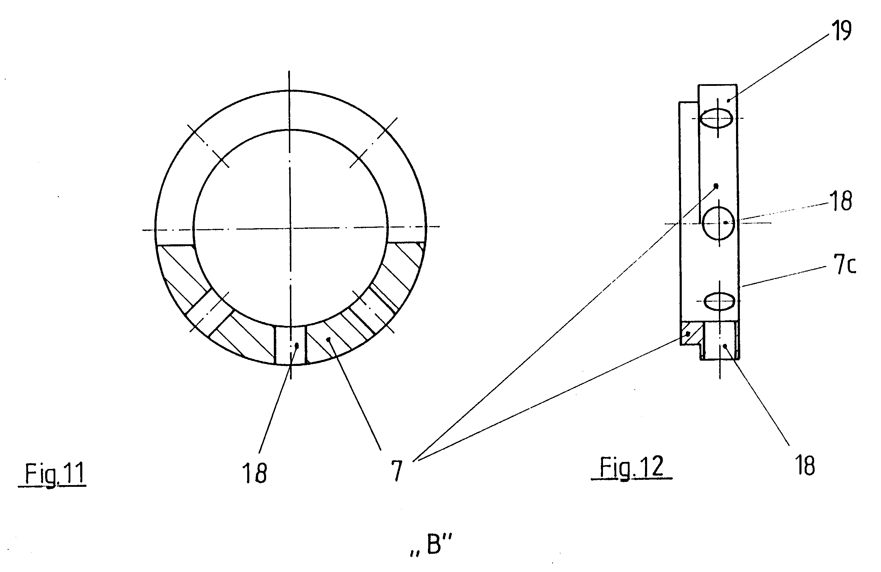

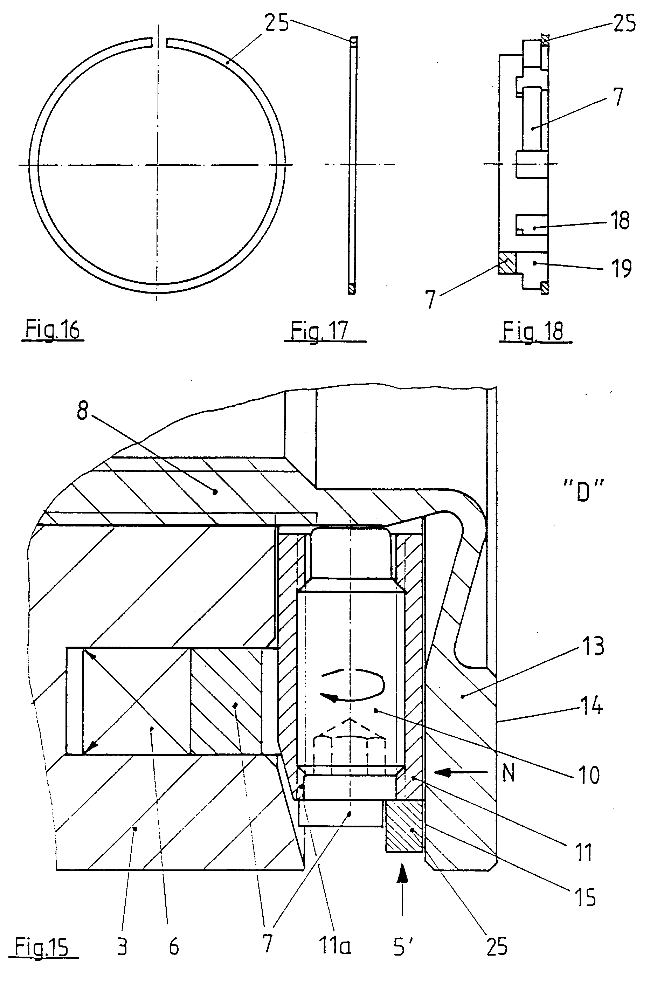

Auf dem in den Zeichnungen dargestellten freien Ende des Dorns 2 ist das Spannelement mit Grundkörper 3 und darin schwimmend gelagertem Ringkolben 7 aufgeschraubt. Bei den Ausführungsbeispielen A (Fig. 1 bis 8), B (Fig. 9 und 10) und D (Fig. 15 bis 18) ist der Grundkörper 3 des Spannelementes auf das Außengewinde 17 einer Hülse 8 aufgeschraubt, die ihrerseits mittels Innengewinde 16 auf dem Fräserdorn 2 sitzt. Die Hülse 8 weist einen nach Art einer Tellerfeder federnd angeordneten radialen Flansch 13 auf. Dieser hat eine Anlagefläche 14 (Fig. 8) zur Anlage am Spannstück 1 (Werkzeug oder Werkstück) und eine dieser gegenüberliegende, dem Ringkolben 7 zugewandte Anlagefläche 15.

Der Grundkörper 3 ist demgemäß bei den Ausführungsformen A, B und D auf die Hülse 8 fest aufgeschraubt.

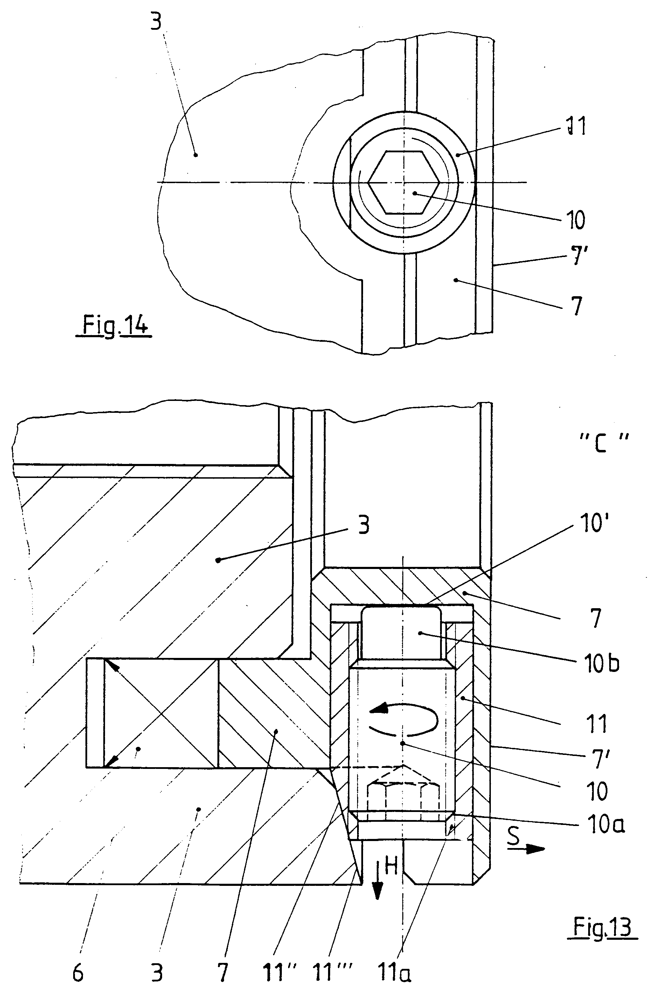

Die Fig. 13 und 14 zeigen eine Ausführungsform C, bei der unter Weglassung des federnden Flansches 13 der Ringkolben 7 unmittelbar an der ihm zugewandten planen Fläche des Rotationsspannstückes 1 anliegt.

Bei allen Ausführungsformen kann der Grundkörper 3 mit einer Schraube 9 gegenüber der Hülse 8 bzw. dem Aufnahmedorn 2 in seiner Lage gesichert werden (vgl. Fig. 1).

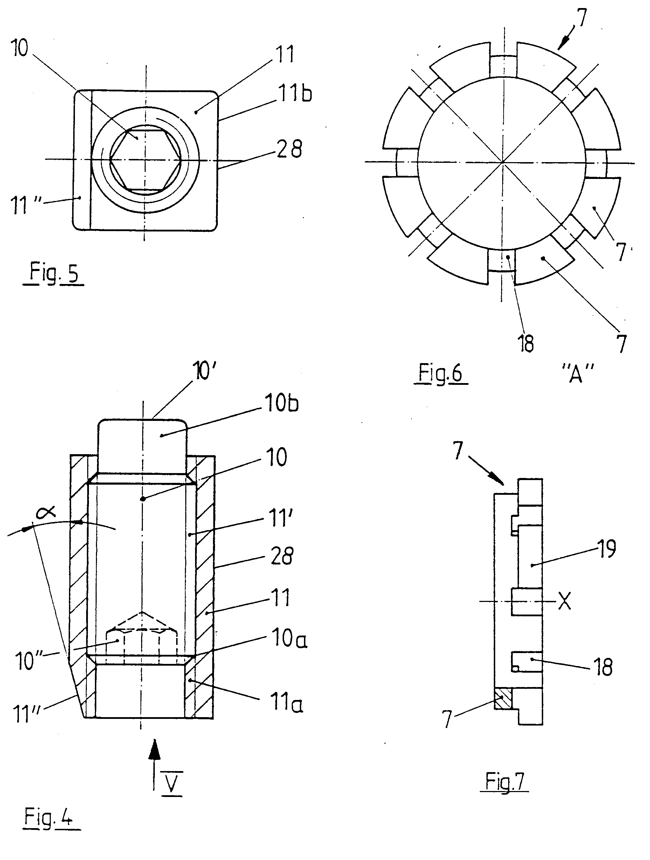

Im Grundkörper 3 befinden sich (vgl. Fig. 2) zwei zylindrische Hydraulikkanäle 24, 24 mit Dichtungen 6, 6 und Druckschrauben 4, 4. Die Kanäle 24 stehen über Bohrungen mit dem axial beweglichen Ringkolben 7 mit dem ihm vorgelagerten Dichtelement 6 in Verbindung (vgl. u.a. Fig. 1). Im Grundkörper 3 ist ferner eine Spannkraftanzeige 12 mit Dichtung 6' vorgesehen, die mit dem Ringkanal 24'' (vgl. Fig. 2), der dem Ringkolben 7 vorgelagert ist, hydraulisch verbunden ist. Der Ringkolben 7 ist schwimmend gelagert und über das in sich geschlossene Hydrauliksystem relativ zum Grundkörper 3 axial verschiebbar, derart, daß er bei einem entsprechenden Spanndruck, der durch die Schrauben 4 aufgebracht werden kann, gegen das Rotationsspannstück 1 zu dessen Verspannung ausgefahren werden kann.

Zwischen dem Ringkolben 7 und der diesem zugewandten Anlagefläche des Werkzeuges bzw. Werkstückes 1 befindet sich ein Druckelement, das erfindungsgemäß durch mehrere symmetrisch zur Längsachse des hydraulischen Spannelementes liegende einstellbare, am Ringkolben 7 sitzende Ausgleichskeile 11 gebildet ist. Wie aus Fig. 3 ersichtlich, sind diese Ausgleichskeile, die auch als Stützkeile bezeichnet werden können, gleichmäßig über den Umfang des Ringkolbens 7 verteilt, wobei zweckmäßig je nach der Größe des Spannelementes mehr als vier, vorzugsweise acht, Ausgleichskeile angeordnet sind. Die Anordnung ist so getroffen, daß die einzelnen Ausgleichskeile 11 radial an der dem Rotationsspannstück 1 zugewandten Spannfläche 7' des Ringkolbens 7 angeordnet sind und je eine radial verstellbare Ausgleichsschraube 10 aufweisen, die in einfacher Weise nach Art eines Gewindestiftes ausgebildet sind.

Die beim Ausführungsbeispiel A der Fig. 1 bis 8 vorgesehenen Ausgleichs- bzw. Stützkeile 11 sind in den Fig. 4 und 5 im einzelnen vergrößert dargestellt; die Fig. 6 und 7 zeigen den für die Aufnahme dieser Ausgleichskeile 11 erfindungsgemäß ausgebildeten Ringkolben 7.

Gemäß dem Ausführungsbeispiel A sind die etwa hülsenförmig gestalteten Ausgleichskeile 11 im Querschnitt rechteckig, vorzugsweise quadratisch ausgebildet. Im Innern sind mittels Innengewinde 11' gewindestiftartige Ausgleichsschrauben 10 radial verstellbar angeordnet. Der Kerndurchmesser des Innengewindes 11' ist mit 10a bezeichnet. Die Ausgleichsschrauben 10 haben in ihrem Fußbereich einen zapfenartigen Ansatz 10b, der mit seinem Boden 10' bei den Ausführungsbeispielen A, B und D an einer Umfangsfläche des Übergangsansatzes 8' der Hülse 8 im eingeschraubten Zustand anliegt. Der gegenüberliegende Kopfbereich ist nach Art einer Imbusschraube ausgebildet.

Alle Ausgleichskeile 11 der Ausführungsbeispiele A bis D sind hülsenförmig gestaltet und haben als Keil eine im Bereich ihres freien Kopfendes liegende Schrägfläche 11'', der eine entsprechende Schrägfläche 11''' am Grundkörper derart zugeordnet ist, daß bei radialer Verstellung der Ausgleichsschraube 10 im Sinne des in Fig. 8 eingezeichneten Ringpfeiles diese den Ausgleichskeil 11 - weil ihr Boden 10' am Ansatz 8' anliegt - in Richtung des Pfeiles H (vgl. Fig. 8, 9, 13), also radial nach außen, verstellt, wobei die schräge Keilfläche 11'' des Ausgleichskeiles 11 an der korrespondierenden Keilfläche 11''' des starren Grundkörpers 3 aufläuft und dadurch eine in Richtung des Pfeiles S wirkende Spannkraft auf den Flansch 13 ausübt, indem die Außenfläche 11b des Ausgleichskeiles 11 gegen die Anlagefläche 15 des Flansches 13 drückt und dadurch dessen gegenüberliegende Anlagefläche 14 gegen die entsprechende Anlagefläche des Rotationswerkzeuges 1 spannt.

Um dies zu bewirken, ist jeder Ausgleichskeil 11 in einer Aufnahme 18 des Ringkolbens 7 gehaltert (vgl. Fig. 6 und 7). Bei der Ausführung A ist die Aufnahme 18 nutförmig entsprechend dem rechteckigen bzw. quadratischen Querschnitt des Ausgleichskeiles 11 (Fig. 4 und 5) ausgebildet, und zwar derart, daß der Ausgleichskeil 11 entsprechend der Verdrehung der Ausgleichsschraube 10 in seiner Aufnahme 18 radial verschiebbar ist.

Die Schrägfläche 11'' am Ausgleichskeil 11 und die Schrägfläche 11''' am Grundkörper 3 bilden mit der jeweiligen Radialen einen Winkel α, der zwischen 10° und 30° liegen kann. Vorzugsweise wird der Winkel α so gewählt, daß keine Selbsthemmung entsteht, wenn bei der Demontage versehentlich zuerst der hydraulische Druckabgebaut wird und dann erst die Ausgleichsschrauben 10 gelöst werden. Dies ist ein wesentlicher Vorteil, da beim Stand der Technik nach Gattungsgebriff stets zuerst der Stützring gelöst werden muß, bevor der hydraulische Druck abgebaut werden kann, da sonst der Stützring verklemmt. Die Schrägflächen 11'' des Ausgleichskeiles 11 sind bei den dargestellten Ausführungsbeispielen an der dem Grundkörper 3 zugewandten Seite des Keiles 11 vorgesehen, so daß ein unmittelbares Zusammenwirken mit der Gegenkeilfläche 11''' am Grundkörper ermöglicht wird.

Die Ausgleichskeile 11 sind, wie erwähnt, in Aufnahmen 18 des Ringkolbens 7 angeordnet. Hierzu weist der eigentliche Ringkolben 7 einen axial vorspringenden Ansatz 19 (vgl. Fig. 7 und 18) auf, in welchem die Aufnahmen 18 vorgesehen sind. Bei der Ausführung A nach den Fig. 1 bis 8, also bei der quadratischen Ausführung der Ausgleichskeile, bilden die planen Außenflächen 11b der Ausgleichskeile 11 die Anpreßflächen für die in Richtung auf das Rotationswerkzeug 1 aufzubringende Spannkraft. Die zwischen den Aufnahmen 18 verbleibenden segmentartigen Flächenabschnitte 7' des Ringkolbens 7 bilden ebenfalls Anlageflächen für den Flansch 13.

Bei den Ausführungsbeispielen A, B und D ist der Grundkörper 3 auf die Hülse 8 aufgeschraubt, die den federnden Radialflansch 13 aufweist, der seinerseits eine Anlagefläche 15 für den Ringkolben 7 bzw. für die Anpreßflächen 11b der im Ringkolben 7 geführten Ausgleichskeile 11 bildet (vgl. Anpreßfläche 11b in Fig. 5). Die andere, parallele Seite des Radialflansches 13 bildet die Anlagefläche 14 für das Rotationsspannstück 1. Infolge der Anordnung des Tellerflansches 13 werden radial gerichtete Verstellkräfte, wie sie insbesondere durch die Schnittkraftbelastung im Betrieb entstehen, nicht mehr auf den Ringkolben 7 einwirken, sondern von dem federnden Tellerflansch 13 aufgefangen. Auch kompensiert der Tellerflansch 13 insbesondere beim Ausfahren des Ringkolbens 7 etwa auftretende ungleichförmige Bewegungen.

Die Ausführungsform B entsprechend den Fig. 9 bis 12 unterscheidet sich von der Ausführungsform A nur dadurch, daß der Querschnitt der Ausgleichskeile 11 rund ist, wobei die Funktion die gleiche ist wie bei der Ausführung A. In den Fig. 9 bis 12 und in den weiteren Figuren sind gleiche Teile mit denselben Bezugszeichen versehen. Bei der Ausführung B sitzen also die runden Ausgleichskeile 11 in den zylindrischen Aufnahmen 18 des Ringkolbens 7, die an dem ringförmigen, axial vorspringenden Ansatz 19 vorgesehen sind, wobei die Ringfläche 7c, wie aus Fig. 9 und 10 ersichtlich, unmittelbar an der Anlagefläche 15 des Flansches 13 anliegt. Wird die mit Außengewinde versehene Ausgleichsschraube 10, die in dem Ausgleichskeil 11 eingeschraubt ist, im Sinne des eingezeichneten Ringpfeiles (vgl. Fig. 9) eingedreht, so bewegt sich der Ausgleichskeil 11, wenn sie mit dem Boden 10' an der Gegenfläche 8' der Hülse 8 anliegt, radial nach außen in Richtung des eingezeichneten Pfeiles H und erzeugt so die in Richtung des Pfeiles S wirkende Spannkraft auf den Flansch 13, der mit seiner Anlagefläche 14 gegen die entsprechende Stirnfläche des Rotationswerkzeuges 1 gespannt wird. Die Spannkraft entsteht, weil die Schrägfläche 11' des Ausgleichskeiles 11 nach außen gedrückt wird, dadurch zur Anlage an die Keilfläche 11''' des Grundkörpers gelangt, wodurch die gegen das Rotationswerkzeug 1 wirkende Spannkraft abgestützt ist.

Bei der Ausführung C nach Fig. 13, 14 befindet sich die Ausgleichsschraube 10, wie bei der Ausführungsform B, in einem im Querschnitt kreisförmigen Ausgleichskeil 11, der ebenfalls wie bei der Ausführungsform B in Aufnahmen 18 mit kreisrundem Querschnitt radial verschiebbar gelagert ist. Der Unterschied zu den Ausführungen A, B, D besteht darin, daß der dort vorgesehene die Hydraulik zurückstellende tellerartige Flansch 13 als zwischengeschaltetes Element weggelassen wurde, so daß der Ringkolben 7 mit seiner radialen Spannfläche 7 (Fig. 12) direkt gegen die radiale Planfläche des Rotationswerkzeuges 1 gespannt wird. Bei diesem Ausführungsbeispiel ist also der Ausgleichskeil 11 mit seiner Schrägfläche 11'' - gelagert in dem schwimmenden Ringkolben 7 - unmittelbar zwischen dem Grundkörper 3 und der Gegenspannfläche des Rotationswerkstückes 1 verspannt. Die Klemmwirkung entsteht, wie bei den anderen Ausführungsbeispielen durch Drehen der Ausgleichsschraube 10 im Sinne des in Fig. 13 eingezeichneten Ringpfeiles, wodurch der Ausgleichskeil 11 in radialer Richtung (Pfeil H) mit seiner Schrägfläche 11'' gegen die entsprechende Schrägfläche 11''' des Grundkörpers aufläuft und dadurch die in Richtung S wirksame Spannkraft erzeugt wird.

Die Ausführung D entsprechend Fig. 15 bis 18 entspricht grundsätzlich dem Aufbau der Ausführungsbeispiele A, B, wobei jedoch als federndes Element hier ein Federring 20 vorgesehen ist, der die Ausgleichskeile 11 selbsttätig zurückstellt, sobald die Ausgleichsschraube 10 herausgedreht wird. Im Ausführungsbeispiel ist der Federring 20 ein offener, spreizbarer Ring, der beim Zurückstellen der Ausgleichsschraube 10 (vgl. den Pfeil S') sich zusammenzieht und dabei eine in Pfeilrichtung N wirkende Rückstellkraft auf den Ringkolben 7 und damit auf die Ausgleichskeile 11 ausübt. Dieser Federring ist in den Fig. 16 und 17 im einzelnen als Ausführungsbeispiel gezeichnet. Die Fig. 18 zeigt den Ringkolben 7 des Ausführungsbeispieles D in Radialansicht, teilweise im Schnitt. Man erkennt, daß hier die Halterungen 18 für den Ausgleichskeil 11 nicht rund, sondern rechteckig, vorzugsweise quadratisch im Querschnitt entsprechend der Gestaltung des Ausgleichskeiles ausgebildet sind. Fig. 15 zeigt Ringkolben 7, Ausgleichskeil 11 und Ausgleichsschraube 10 in einer Stellung, bei der die Ausgleichsschrauben gelöst, also der hydraulische Druck abgebaut ist und demgemäß die Ausgleichskeile 11 durch die Wirkung des Federringes 20 selbsttätig zurückgestellt sind.

Die Handhabung der dargestellten Ausführungsbeispiele erfolgt in der Weise, daß zunächst das Spannelement als Ganzes auf den Spanndorn 2 aufgeschraubt wird, bis es - bei den Ausführungsbeispielen A, B und D - mit der Anlagefläche 14 des Federflansches 13 an der Gegenspannfläche des Rotationswerkzeuges 1 satt anliegt. Dann werden die Druckschrauben 4 eingedreht und damit der Druck in dem hydraulischen System aufgebaut, bis die gewünschte Spannkraft erreicht ist, die an der Spannkraftanzeige 12 angezeigt wird. Danach werden alle Ausgleichsschrauben 10 gleichmäßig fest angelegt, wodurch bei den Ausführungsbeispielen A, B, D der Federflansch 13 mittels der Ausgleichskeile 11 axial gegen den Grundkörper 3 abgestützt wird. Damit ist eine mechanisch wirkende, in sich starre Abstützung zwischen Rotationswerkzeug 1 und dem Spannkörper 3 des Spannelementes hergestellt. Durch gezieltes Nachstellen einzelner Ausgleichsschrauben 10 läßt sich nun der Rundlauf des Rotationsspannstückes 1 optimal einstellen. Danach kann das hydraulische System entlastet werden, ohne daß die eingestellte starre Abstützung aufgehoben wird. Ferner kann, wie erwähnt, der Winkel α der Keilschrägen an den Ausgleichskeilen 11 bzw. dem Grundkörper 3 so gewählt werden, daß keine Selbsthemmung entsteht, wenn bei der Demontage versehentlich zuerst der hydraulische Druck abgebaut wird und erst dann die Ausgleichsschrauben gelöst werden, so daß, wie ausgeführt, gegenüber bekannten Lösungen nicht darauf zu achten ist, daß bei diesen stets als erstes der Stützring gelöst werden muß, bevor der hydraulische Druck abgebaut wird, um ein Verklemmen des Stützringes und damit ein Wiederbetätigen der Hydraulik zwecks Entlastung des Stützringes zu vermeiden.

## Patentansprüche

1. Hydraulisches Spannelement zur axialen Verspannung von scheiben- oder wellenförmigen Rotations-Spannstücken (1) auf einem Aufnahmedorn (2), mit einem auf dem Dorn (2) aufbringbaren Grundkörper (3), in welchem ein Ringkolben (7) schwimmend gelagert ist, der über ein in sich geschlossenes Hydrauliksystem relativ zum Grundkörper (3) gegen das Spannstück (1) ausfahrbar ist und dabei das Spannstück (1) axial fest verspannt, wobei ein Druckelement mit symmetrisch zur Längsachse des Spannelementes befindlicher Keilfläche vorgesehen ist, das mittels radial beweglicher Ausgleichsschrauben axial verschiebbar und in einer gewünschten Spannstellung feststellbar ist,
dadurch gekennzeichnet, daß das Druckelement durch mehrere an dem Ringkolben (7) gehalterte Ausgleichskeile (11) gebildet ist, die zur Längsachse (X) des hydraulischen Spannelementes einstellbar sind.

2. Spannelement nach Anspruch 1,
dadurch gekennzeichnet, daß die einzelnen Ausgleichskeile (11) radial an der dem Spannstück (1) zugewandten Spannfläche (7') des Ringkolbens (7) angeordnet sind und je eine radial verstellbare Ausgleichsschraube (10) aufweisen.

3. Spannelement nach Anspruch 1 oder 2,
dadurch gekennzeichnet, daß die im Querschnitt rechteckigen oder kreisrunden Ausgleichskeile (11) in nut- oder kreisförmigen Aufnahmen (18) des Ringkolbens (7) radial verstellbar angeordnet sind, wobei die Aufnahmen (18) dem Querschnitt der Ausgleichskeile (11) angepaßt sind.

4. Spannelement nach einem der Ansprüche 1 bis 4,
dadurch gekennzeichnet, daß jeder Ausgleichskeil (11) hülsenförmig ausgebildet ist und als Keil eine vorzugsweise am Kopf liegende Schrägfläche (11'') aufweist, der eine entsprechende Schrägfläche (11''') am Grundkörper (3) derart zugeordnet ist, daß bei radialer Verstellung der Ausgleichsschraube (10), vorzugsweise bei ihrer radialen Bewegung zur Achse (X) des Spannelementes hin, eine gegen das Rotationsspannstück (1) gerichtete Spannkraft (S) wirksam ist und der Ausgleichskeil (11) in der gewünschten Einstellage gegen den Grundkörper (3) abgestützt ist.

5. Spannelement nach einem der Ansprüche 1 bis 4,
dadurch gekennzeichnet, daß der Ausgleichskeil (11) ein Innengewinde (10a) für die Führung der Ausgleichsschraube (10) aufweist, die ihrerseits in ihrer radialen Endlage mit ihrem Boden (10') gegen einen Teil (8') der Hülse (8) anliegt.

6. Spannelement nach einem der Ansprüche 1 bis 5,
dadurch gekennzeichnet, daß die Schrägfläche (11''') des Grundkörpers (3) und die korrespondierende Schrägfläche (11'') des Ausgleichkeiles (11) mit der zugehörigen Radialen einen spitzen Winkel α von 15° bis 30°, vorzugsweise 20°, bilden.

7. Spannelement nach einem der Ansprüche 1 bis 6,
dadurch gekennzeichnet, daß die Schrägfläche (11'') des Ausgleichkeiles (11) an der dem Grundkörper (3) zugewandten Seite des Keiles (11) vorgesehen ist.

8. Spannelement nach einem der Ansprüche 1 bis 7,
dadurch gekennzeichnet, daß der Grundkörper (3) auf eine auf den Dorn (2) aufschraubbare Hülse (8) mit federndem Radialflansch (13) aufbringbar ist, der eine Anlagefläche (15) für den Ringkolben (7) und eine Anlagefläche (14) für das Spannstück (1) aufweist.

9. Spannelement nach Anspruch 8,
dadurch gekennzeichnet, daß die Hülse (8) außer dem Innengewinde (16) zum Aufschrauben des Spannstückes (1) ein Außengewinde (17) zur Verbindung mit dem Grundkörper (3) hat.

10. Spannelement nach einem der Ansprüche 1 bis 8,
dadurch gekennzeichnet, daß die Aufnahmen (18) für die Ausgleichskeile (11) an einem ringförmigen, axial vorspringenden Ansatz (19) des Ringkolbens (7) ausgebildet sind.

11. Spannelement nach Anspruch 10,
dadurch gekennzeichnet, daß bei rechteckförmiger Ausbildung der Ausgleichskeile (11) die äußeren Flächen (11b) der Ausgleichskeile (11) Anpreßflächen für eine entsprechende Fläche (15) des Tellerfederflansches (13) bilden.

12. Spannelement nach einem der Ansprüche 1 bis 11,
dadurch gekennzeichnet, daß der Ringkolben (7) mit seiner dem Rotationsspannstück (1) zugewandten Seite unter Vermeidung eines Zwischenstückes unmittelbar an dem Rotationsspannstück (1) anliegt.

13. Spannelement nach einem der Ansprüche 1 bis 12,
dadurch gekennzeichnet, daß in axialer Richtung zum Spannstück (1) gesehen vor den Ausgleichskeilen (11) zur selbsttätigen Rückstellung der Ausgleichskeile ein Federelement, vorzugsweise ein federnder, offener Ring, (25) vorgesehen ist.

14. Spannelement nach einem der Ansprüche 1 bis 13,
dadurch gekennzeichnet, daß über den Umfang des Ringkolbens (7) gleichmäßig verteilt etwa vier bis zehn, vorzugsweise acht, Ausgleichskeile (11) mit integrierten Ausgleichsschrauben (10) vorgesehen sind.

## Claims

1. A hydraulic clamping device for axial clamping of disc-or wave-shaped rotary clamped items (1) on a support spindle (2) by means of a basic section (3), attachable to the spindle (2) in which an annular piston (7) is floating, extendible by a closed hydraulic system in relation to the basic section (3) against the clamped item (1), thus firmly clamping the clamped piece (1) in axial direction, with a compression device being provided, having a wedge-shaped area arranged symmetrically to the longitudinal axis of the clamping device, being axially displaceable by means of radially mobile compensating screws and lockable in a required clamping position, wherein the compression device is formed by several compensating wedges (11) supported by an annular piston (7), adjustable in relation to the longitudinal axis (X) of the hydraulic clamping device.

2. A clamping device according to Claim 1,
wherein individual compensating wedges (11) are arranged radially on an annular piston (7) facing the clamped item and including one radially adjustable compensating screw (10) each.

3. A clamping device according to Claims 1 or 2,
whereby compensating wedges (11), being rectangular or circular in section, are radially adjustable and arranged in groove-shaped or circular supports (18) of the annular piston (7), with the supports (18) being adjusted to the section of compensating wedges (11).

4. A clamping device according to Claims 1 to 4,
wherein each compensating wedge (11) is formed as a sleeve, including a shoulder (11') preferably arranged at the top as a wedge allocated to a relative shoulder (11''') on the basic section (3) in such a way that the clamping pressure (S)is activated on radial adjustment of the compensating screw (10), preferably during its radial motion to the axis (X) of the clamped item, with the compensating wedge (11) being supported against the basic section (3) in the required setting position.

5. A clamping device according to one of Claims 1 to 4, wherein the compensating wedge (11) includes an internal thread (10a) for guiding a compensating screw (10), with the bottom (10') of which in turn being supported against part (8') of the sleeve (8) in its radial end position.

6. A clamping device according to one of Claims 1 to 5, wherein the shoulder (11''') of the basic section (3) and the corresponding shoulder (11'') of the compensating wedge (11) and the respective radial are forming an acute angle α of 15° to 30°, preferably of 20°.

7. A clamping device according to one of Claims 1 to 6, wherein the shoulder (11'') of the compensating wedge (11) is provided on the side of a wedge (11), facing the basic section (3).

8. A clamping device according to one of Claims 1 to 7, wherein a basic section (3) may be attached to a spindle (2), including a sleeve (8) and a biased radial flange (13), providing a support area (15) for an annular piston (7) and a support area (14) for a clamped item (1).

9. A clamping device according to Claim 8,
wherein the sleeve (8) includes an external thread (17) for connection of a basic section (3), in addition to an internal thread (16) for fastening a clamped item (1).

10. A clamping device according to one of Claims 1 to 8, wherein the supports (18) for the compensating wedges (11) is an integral part of an annular axial projection of an annular piston (7).

11. A clamping device according to Claim 10,
wherein the external areas (11b) of the compensating wedges (11) are forming contact areas for a matching area (15) of a biased plate flange (13), with the said compensating wedges (11) being of rectangular shape.

12. A clamping device according to one of Claims 1 to 10, wherein the side of the annular piston (7) facing the rotary clamped piece (1) is in direct contact with the rotary clamped item in order to eliminate an adapter.

13. A clamping device according to one of Claims 1 to 12, wherein a biased unit, preferably a biased split washer (25) is provided in axial direction to a clamped item (1) prior to compensating wedges (11) for automatically resetting the said compensating wedges.

14. A clamping device according to one of Claims 1 to 13, wherein approximately four to ten, preferably eight compensating wedges (11) with integral compensating screws are evenly distributed over the circumference of an annular piston (7).

## Revendications

1. Elément de serrage hydraulique pour le serrage axial de pièces à serrer de révolution en forme de disque ou d'arbre (1) sur un mandrin porte-pièce (2), comportant un corps de base (3) se montant sur le mandrin (2) et dans lequel est monté flottant un piston annulaire (7) qui peut, par un système hydraulique fermé, être sorti vers la pièce à serrer (1) par rapport au corps de base (3) et serre alors solidement axialement la pièce à serrer (1), et dans lequel est prévu un élément de pression à surface de coin placée symétriquement par rapport à l'axe longitudinal de l'élément de serrage qui est déplaçable axialement et immobilisable dans une position de serrage désirée au moyen de vis compensatrices mobiles radialement, caractérisé par le fait que l'élément de pression est formé de plusieurs coins compensateurs (11) montés sur le piston annulaire (7) et réglables par rapport à l'axe longitudinal (X) de l'élément de serrage hydraulique.

2. Elément de serrage selon la revendication 1, caractérisé par le fait que les différents coins compensateurs (11) sont placés radialement sur la face de serrage (7') du piston annulaire (7) dirigée vers la pièce à serrer (1) et présentent chacun une vis compensatrice (10) mobile radialement.

3. Elément de serrage selon l'une des revendications 1 et 2, caractérisé par le fait que les coins compensateurs (11), de section rectangulaire ou circulaire, sont placés mobiles radialement dans des logements en forme de rainure ou circulaires (18) du piston annulaire (18) qui sont adaptés à la section des coins compensateurs (11).

4. Elément de serrage selon l'une des revendications 1 à 4, caractérisé par le fait que chaque coin compensateur (11) est en forme de douille et présente comme coin une face inclinée (11'') située de préférence à la tête qui est associée à une face inclinée correspondante (11''') du corps de base (3) de façon telle qu'en cas de déplacement radial de la vis compensatrice (10), de préférence lors de son mouvement radial vers l'axe (X) de l'élément de serrage, agisse une force de serrage (S) dirigée vers la pièce de révolution à serrer (1) et le coin compensateur (11) soit appuyé dans la position de réglage désirée contre le corps de base (3).

5. Elément de serrage selon l'une des revendications 1 à 4, caractérisé par le fait que le coin compensateur (11) présente un filetage intérieur (10a) pour le guidage de la vis compensatrice (10), qui est elle-même appuyée dans sa position extrême radiale, par sa base (10'), contre une partie (8') de la douille (8).

6. Elément de serrage selon l'une des revendications 1 à 5, caractérisé par le fait que la face inclinée (11''') du corps de base (3) et la face inclinée correspondante (11'') du coin compensateur (11) font avec la radiale correspondante un angle aigu α de 15° à 30°, de préférence de 20°.

7. Elément de serrage selon l'une des revendications 1 à 6, caractérisé par le fait que la face inclinée (11'') du coin compensateur (11) est prévue sur le côté de celui-ci dirigé vers le corps de base (3).

8. Elément de serrage selon l'une des revendications 1 à 7, caractérisé par le fait que le corps de base (3) peut être monté sur une douille (8) vissable sur le mandrin (2) et ayant une aile radiale élastique (13) qui présente une face d'appui (15) pour le piston annulaire (7) et une face d'appui (14) pour la pièce à serrer (1).

9. Elément de serrage selon la revendication 8, caractérisé par le fait que la douille (8) a en plus du filetage intérieur (16) pour le vissage de la pièce à serrer (1) un filetage extérieur (17) pour l'assemblage avec le corps de base (3).

10. Elément de serrage selon l'une des revendications 1 à 8, caractérisé par le fait que les logements (18) pour les coins compensateurs (11) sont faits sur un appendice annulaire saillant axialement (19) du piston annulaire (7).

11. Elément de serrage selon la revendication 10, caractérisé par le fait que lorsque les coins compensateurs (11) sont rectangulaires, leurs faces extérieures (11b) forment des faces de serrage pour une face correspondante (15) de l'aile rondelle élastique (13).

12. Elément de serrage selon l'une des revendications 1 à 11, caractérisé par le fait que le piston annulaire (7) est appuyé directement par son côté dirigé vers la pièce de révolution à serrer (1), sans pièce intermédiaire, contre cette pièce (1).

13. Elément de serrage selon l'une des revendications 1 à 12, caractérisé par le fait qu'un élément élastique, de préférence un anneau ouvert élastique (25), est prévu devant les coins compensateurs (11) dans la direction axiale vers la pièce à serrer (1) pour le rappel automatique de ceux-ci.

14. Elément de serrage selon l'une des revendications 1 à 13, caractérisé par le fait qu'environ quatre à dix, de préférence huit, coins compensateurs (11) à vis compensatrices intégrées (10) sont prévus régulièrement répartis sur le pourtour du piston annulaire (7).
